# EUROPEAN PATENT APPLICATION

(11) **EP 2 490 155 A1**
(43) Date of publication of application: **22.08.2012**
(21) Application number: 12275016.9
(22) Date of filing: 17.02.2012
(51) Int. Cl.: G06K 9/00, G09B 21/00

(54) **A user wearable visual assistance system**

(30) Priority: 17.02.2011 US 201161443739 P; 17.02.2011 US 201161443776 P
(71) Applicant: Orcam Technologies Ltd., 91450 Jerusalem (IL)
(72) Inventor: Na'aman, Erez, 91450 Jerusalem (IL); Shashua, Amnon, 91450 Jerusalem (IL); Wexler, Yonatan, 91450 Jerusalem (IL)
(74) Representative: Jehan, Robert

(57) **Abstract**

A visual assistance device wearable by a person. The device includes a camera (12) and a processor (16). The processor (16) captures multiple image frames (14) from the camera (12). A candidate image (527) of an object is searched in the image frames (14). The candidate image (527) may be classified as an image of a particular object or in a particular class of objects and is thereby recognized. The person is notified of an attribute related to the object.

## Description

### BACKGROUND

### 1. Technical Field

Aspects of the present invention relate to a user wearable visual assistance system.

### 2. Description of Related Art

The visually impaired suffer from difficulties due to lack of visual acuity, field of view, color perception and other forms of visual impairments. These challenges impact life in many aspects for example mobility, risk of injury, independence and situational awareness in everyday life.

Many products offer solutions in the realm of mobility such as global positioning system (GPS), obstacle detection without performing recognition, and screen readers. These products may lack certain crucial aspects to integrate fully and seamlessly into the life of a visually impaired person.

Thus, there is a need for and it would be advantageous to have a device which integrates new concepts of a supporting and enhancing quality of life for the visually impaired.

### BRIEF SUMMARY

According to an aspect of the invention, there is provided a method for visually assisting a person using a device wearable by the person as in claim 1.

According to an aspect of the invention, there is provided a device as in claim 12.

According to features of the present invention, various methods and devices are provided for visually assisting a person using a device wearable by the person. The device includes a camera and a processor. The processor captures multiple image frames from the camera. A candidate image of an object is searched in the image frames. The candidate image may be classified as an image of a particular object or in a particular class of objects and is thereby recognized. The person is notified of an attribute related to the object. The candidate image may be of a specific hand gesture, and the classification includes recognizing the specific hand gesture. The device may audibly confirm to the person that the specific hand gesture is recognized. The candidate image may be of an object in the environment of the person other than a hand gesture and the device may be controlled responsive to the object in the environment. The person may track the candidate image by maintaining the candidate image in the image frames. The tracking may be based on sound perception, partial vision or situational awareness by orienting the head-worn camera in the direction of the object. The tracked candidate image may be then selected for classification and recognition. Responsive to the recognition of the object, the person may be audibly notified of an attribute related to the object. The device may be configured to recognize a bus, a traffic signal and/or a bank note. Alternatively, the device may be configured to recognize a bus and a traffic signal. Alternatively, the device may be configured to recognize a bus and a bank note. Alternatively, the device may be configured to recognize a traffic signal and a bank note. If the recognized object is a bus, the attribute provided may be the number of the bus line, the destination of the bus, or the route of the bus. If the recognized object is a traffic signal then the attribute may be the state of the traffic signal. If the recognized object is a bank note then the attribute may be the denomination of the bank note.

Various methods are described herein for operating a device wearable by a person. The device includes a camera and a processor. The processor captures multiple image frames from the camera. A gesture of the person is detected in the field of view of the camera. The gesture may be classified as one of multiple gestures to produce a recognized gesture. Responsive to the recognized gesture, an audible output is provided and may be heard by the person. The device may be controlled based on the recognized gesture. The visual field of the camera may be swept to search for a hand or a face. In order to perform the classification, a multi-class classifier may be trained with multiple training images of multiple classes of objects to provide a trained multi-class classifier. The classification may then be performed using the trained multi-class classifier by storing the trained multi-class classifier and loading the processor with the trained multi-class classifier. The objects in the multiple classes may include traffic lights, bank notes, gestures and/or buses. When the gesture points for instance using a finger in the vicinity of text in a document, the image frames may be analyzed to find the text in the document. The analysis may be performed by increasing the resolution of the camera responsive to the detection of the gesture. Recognition of the text may be performed to produce recognized text. The audible output may include reading the recognized text to the person.

According to features of the present invention, various devices wearable by a person may be provided which include a camera and a processor. The processor captures multiple image frames from the camera. The device is operable to detect a gesture of the person in the field of view of the camera. The device may classify the gesture as one of multiple gestures to produce thereby a recognized gesture. The device may respond to the recognized gesture to provide an audible output to the person. The device may control the device based on the recognized gesture. The device may sweep the visual field of the camera and thereby search for an object which may be a hand or a face.

A multi-class classifier may be trained with multiple training images of multiple classes of objects prior to the classification to produce a trained multi-class classifier. The device may store the trained multi-class classifier and load the processor with the trained multi-class classifier. The classification may then performed using the trained multi-class classifier. The objects may include traffic lights, bank notes, gestures or buses. When the gesture points in the vicinity of text in a document, the device may analyze the image frames to find the text in the document and perform recognition of the text to produce recognized text. The analysis may increase resolution of the camera responsive to detection of the gesture. The audible output may include reading the recognized text to the person.

According to features of the present invention, there is provided an apparatus to retrofit eyeglasses. The apparatus may include a docking component attachable to an arm of the eyeglasses and a camera attachable, detachable and re-attachable to the docking component. The camera may magnetically attach, detach and re-attach to the docking component. The apparatus may further include a processor operatively attached to the camera and an audio unit, operatively attached to the processor, adapted to be in proximity to an ear of the user. The processor may be configured to provide an output to the audio unit responsive to recognition of an object in the field of view of the camera.. The processor may be a portion of a smart phone. The audio unit may include a bone conduction headphone to provide the audible output to the user. The camera may be substantially located at or near the frame front of the eye glasses. The camera may be adapted to capture image frames in a view substantially the same as the view of the person.

### BRIEF DESCRIPTION OF THE DRAWINGS

The invention is herein described, by way of example only, with reference to the accompanying drawings, wherein:
Figure 1 shows a system diagram, according to aspects of the present invention.
Figure 2a shows an isometric view of an apparatus, according a feature of the present invention.
Figure 2b shows an alternative isometric view of the apparatus shown in Figure 2a, according to a feature of the present invention.
Figure 3 shows eyeglasses retrofit according to a feature of the present invention.
Figure 4 shows retrofit of eyeglasses shown in Figure 3 with a portion of the apparatus shown in figures 2a and 2b, according to a feature of the present invention.
Figure 5a-5c, Figure 6 and Figures 7-8 are flow diagrams which illustrate processes according to different features of the present invention.
Figure 9a shows a person wearing eyeglasses as shown in Figure 4 and gesturing.
Figures 9b-9e show other possible hand gestures in the visual field of the camera, according to different aspects of the present invention.
Figures 10-13 shows further examples of a person wearing and using the device of Figure 4 for detecting and recognizing text, a bus, a bank note and a traffic signal.

### DETAILED DESCRIPTION

Reference will now be made in detail to features of the present invention, examples of which are illustrated in the accompanying drawings, wherein like reference numerals refer to the like elements throughout. The features are described below to explain the present invention by referring to the figures.

Before explaining features of the invention in detail, it is to be understood that the invention is not limited in its application to the details of design and the arrangement of the components set forth in the following description or illustrated in the drawings. The invention is capable of other features or of being practiced or carried out in various ways. Also, it is to be understood that the phraseology and terminology employed herein is for the purpose of description and should not be regarded as limiting.

The term "frame front" as used herein refers to the front part of the eyeglass frame that holds the lenses in place and bridges the top of the nose.

The term "bone conduction" as used herein refers to the conduction of sound to the inner ear through the bones of the skull.

The term "classify" is used herein in the context of vision processing of candidate image and refers to recognizing an object to belong to a specific class of objects. Examples of classes of objects include buses, hand gestures, bank notes and traffic signals.

The term "attribute" is used herein refers to specific information of the recognized object. Examples may include the state of a recognized traffic signal, or a recognized hand gesture which may be used for a control feature of the device; the denomination of a recognized bank note is an attribute of the bank note; the bus number is an attribute of the recognized bus.

The term "tracking" an image as used herein refers to maintaining the image of a particular object in the image frames. Tracking may be performed by a head-worn camera by the user of the device by orienting or maintaining his head in the general direction of the object. Tracking may be performed by the visually impaired user by sound, situational awareness, or by partial vision. Tracking is facilitated when there is minimal parallax error between the view of the person and the view of the camera.

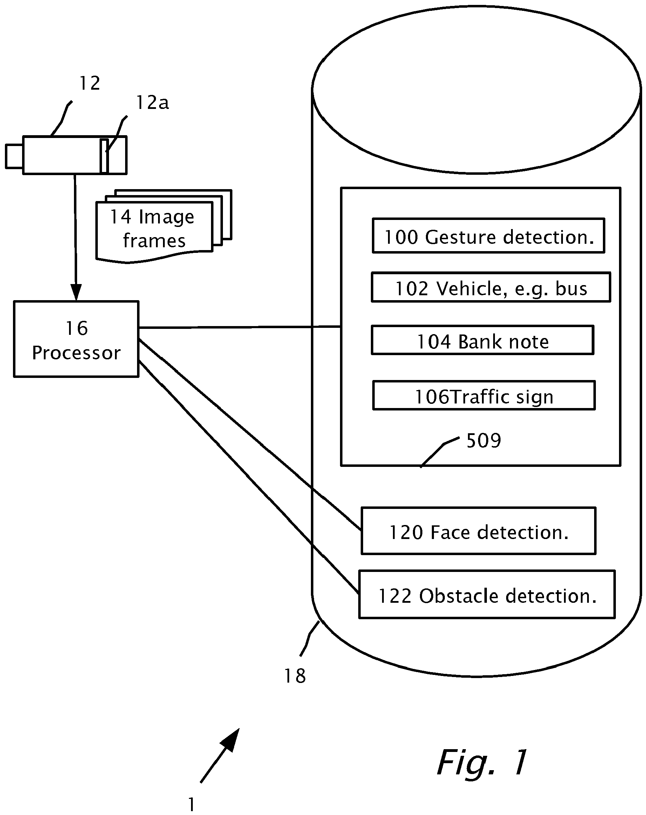

Reference is now made to Figure 1 which shows a system **1,** according to a feature of the present invention. A camera **12** with image sensor **12a** which captures image frames **14** in a forward view of camera **12.** Camera 12 may be a monochrome camera, a red green blue (RGB) camera or a near infra red (NIR) camera. Image frames **14** are captured and transferred to processor **16** to be processed. The processing of image frames **14** may be based upon algorithms in memory or storage **18.** Storage **18** is shown to include a classifier **509** which may include gesture detection **100,** vehicle detection and recognition **102,** bank note detection and recognition **104** and/ or traffic sign detection and recognition **106.** Classifier **509** may be a multi-class classifier and may include, for example, multiple classes of different images of different objects including bank notes, vehicles,e.g. buses, traffic signs and/or signals, and gestures. Another classifier may be available for face detection **120.** An algorithm may be available for obstacle detection **122** with or without use of an additional sensor (not shown)

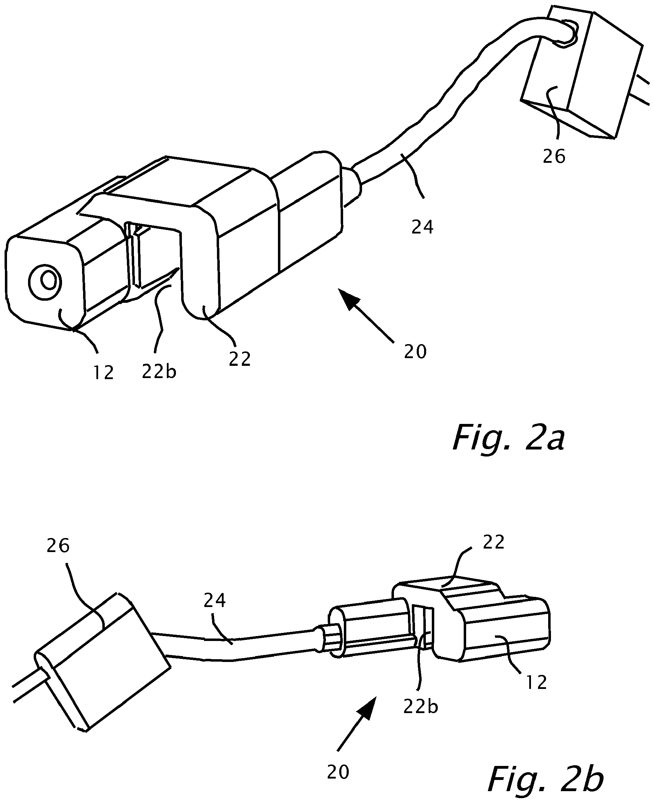

Reference is now made to Figure 2a which shows a view of an apparatus **20,** according a feature of the present invention. Camera **12** may be located in a housing which is attached to a mount **22.** Mount **22** connects electrically to an audio unit **26** via a cable **24.** A slot **22b** is located between camera **12** and mount **22.** Both camera **12** and audio unit **26** may be operatively connected to processor **16** and optionally storage **18.** Processor **16** and storage **18** may be a custom unit or alternatively may be a mobile computer system, e.g. smart phone. Audio unit **26** (not shown) may be an audio speaker which may be in close proximity to and/ or attached the ear of the user or located and attached at the bend in arm **32.** Alternatively, audio unit **26** may be a bone conducting headphone set which may conduct through to one ear or to both ears of the person. Unit **26** may also be a earphone connected to processor **16** by a wireless connection, *e*.*g*. BlueTooth^{RTM}.

Reference is now made to Figure 2b which shows an alternative view of apparatus **20,** showing camera **12,** mount **22,** slot **22b,** cable **24** and audio unit **26,** according to a feature of the present invention.

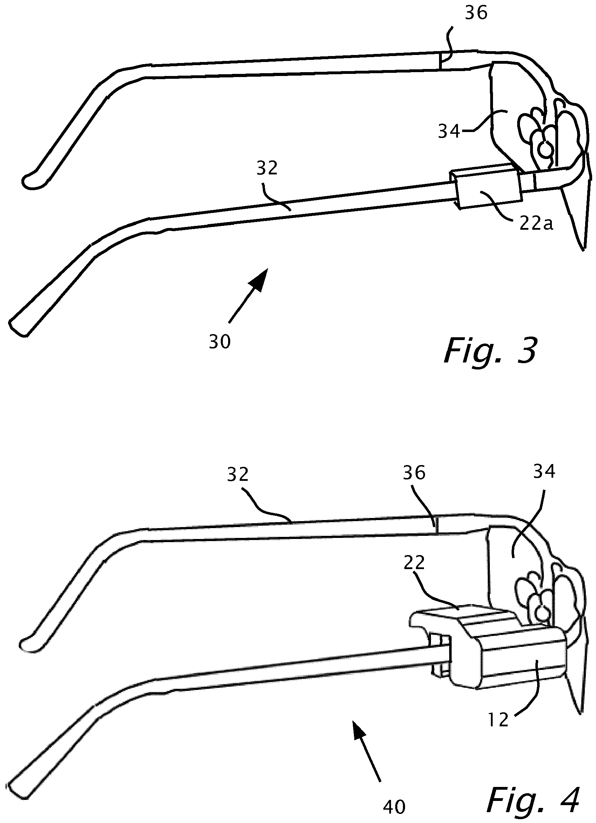

Reference is now made to Figure 3 which shows eyeglasses **30** retrofit according to a feature of the present invention. Eyeglasses **30** has two arms **32** connected to the frame front of eyeglasses **30** with hinges **36.** The frame front hold the lenses **34** of eyeglasses **30.** A docking component **22a** is attached to an arm **32** near to the frame front but just before hinge **36.**

Reference is now made to Figure 4 which shows a device **40** of eyeglasses **30** retrofit with at least a portion of apparatus **20,** according to a feature of the present invention. Camera **12** may be docked on docking component **22a** so that slot **22b** between mount **22** and camera **12** slides onto docking component **22a.** A magnetic connection between the slot and docking component **22a** may allow camera **12** and mount **22** to be attachable, detachable and re-attachable to eyeglasses **30** via docking component **22a.** Alternatively, a spring loaded strip located in the slot or on either side of docking component **22a** (located behind hinge **36**) may be utilized to allow camera **12** to be attachable, detachable and re-attachable to eyeglasses **30.** Any other means known in the art of mechanical design may alternatively be utilized to allow camera **12** to be attachable, detachable and re-attachable to eyeglasses **30.** Camera **12** is therefore, located to capture images frames **14** with a view which may be substantially the same view (provided through lenses **34** if applicable) of the person wearing eyeglasses **30.** Camera **12** is therefore, located to minimize parallax error between the view of the person and view of camera **12.**

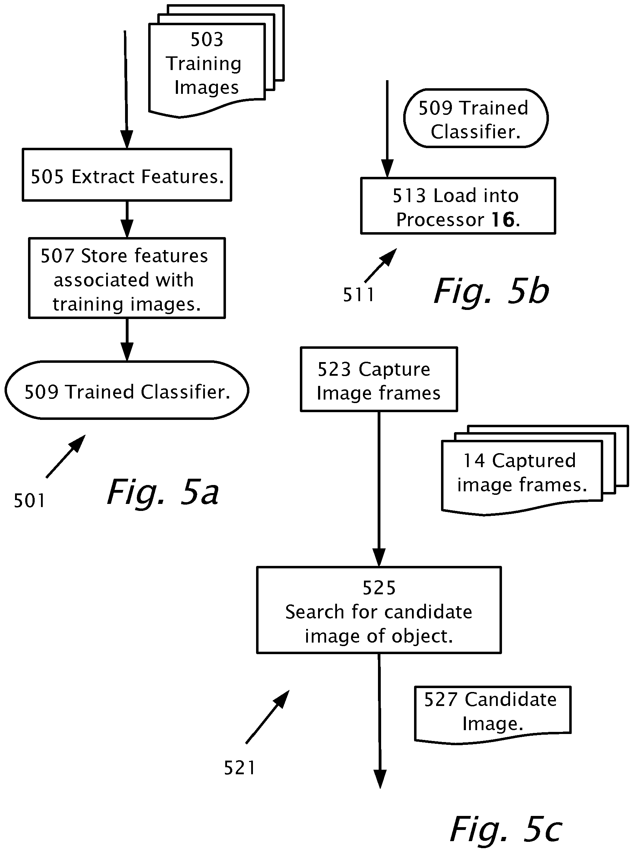

Reference is now made to Figure 5a which shows a method **501** for training a multi-class classifier **509,** according to a feature of the present invention. Training of classifier **509** is performed prior to using classifier **509** to classify for example gestures, bank notes, vehicles, particularly buses and/or traffic signals or traffic signs. Training images **503,** for example of bank notes for a particular country, are provided and image features of the bank notes are extracted in step **505.** Features extracted (step **505**) from training images **503** may include optical gradients, intensity, color, texture and contrast for example. Features of the bank notes for a particular country may be stored (step **507**) to produce a trained classifier **509.** A similar exercise may be performed for steps **503** and **505** with respect to hand gestures. Features of hand gestures may be stored (step **507**) to produce a. trained classifier **509.** An example of a mult-class classifier **509** which may be produced includes the extracted features of both bank notes as one class of objects and hand gestures as another class of objects.

Optical flow or differences between image frames **14** may be further used classification for example to detect and recognition gesture motion or to detect and recognize the color change of a traffic signal

Reference is now made to Figure 5b, which shows a method **511,** according to a feature of the present invention, the trained classifier **509,** is loaded into processor **16** in step **513.**

Reference is now made to Figure 5c, which shows a method **521,** according to a feature of the present invention. With the trained classifier **509** loaded into processor **16** (step **513),** image frames **14** are captured in step **523** of the various possible visual fields of the person wearing device **40.** The captured image frames **14** are then used to search (step **525**) for a candidate image **527** for an object found in the image frames **14.** Further processing of candidate images **527** are shown in the descriptions that follow below.

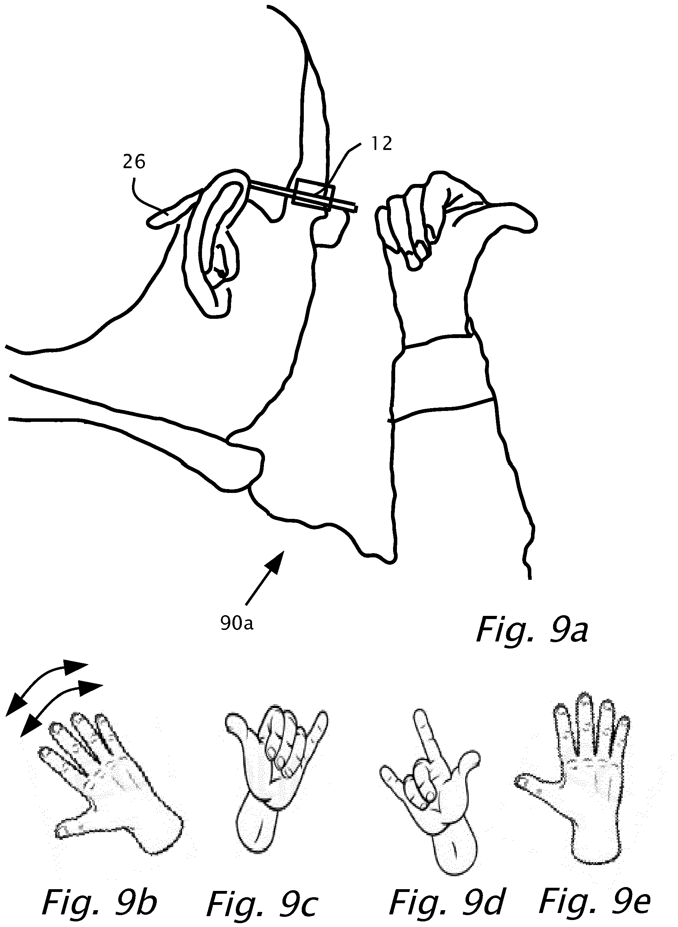

Reference is now made to Figure 9a which shows a person wearing device **40** and visual field **90a** of camera **12.** The person is presenting a hand gesture in the field of view of camera **12.** The gesture shown for example being the right hand palm side of the person with fingers closed and the thumb pointing out to the right. Figures 9b-9e show other example hand gestures which may be in visual field **90a** of the person and camera **12.** Figure 9b shows the back or dorsal part of an open right hand which is being waved from side to side. Figure 9c shows a palm side a left hand with thumb and little finger extended. Figure 9d shows a palm side of a right hand with thumb, little finger and index finger extended. Figure 9e shows the back or dorsal part of an open right hand which is stationary.

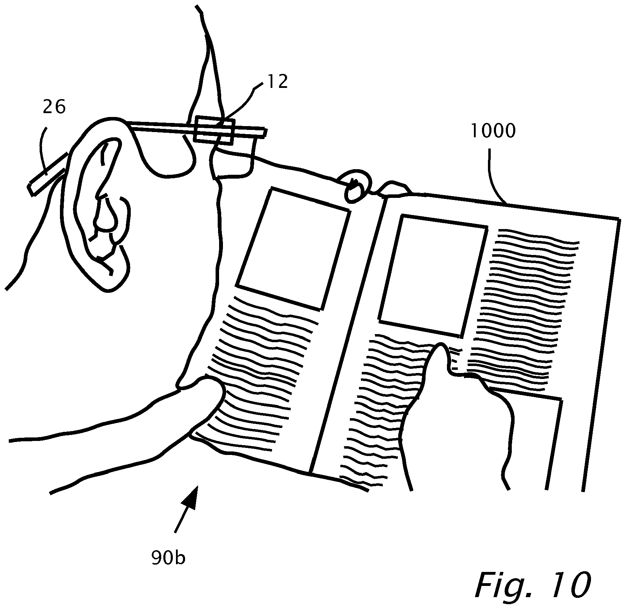

Reference is now made to Figure 10 which shows a visual field **90b** of a person wearing device **40.** Visual field **90c** of the person includes a document **1000** and the pointing of the index finger of the right hand to text in document **1000.** Document **1000** in this case is a book but also may be a timetable, notice on a wall or a text on some signage in close proximity to the person such as text on the label of a can for example.

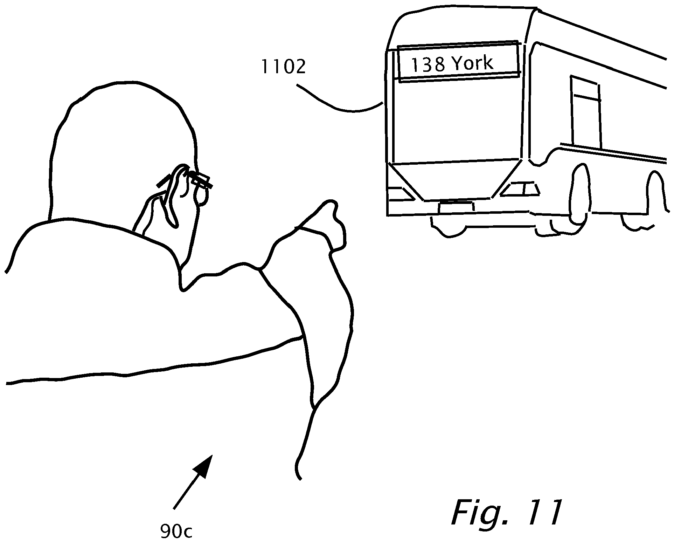

Reference is now made to Figure 11 which shows a visual field **90c** of a person wearing device **40.** Here visual field **90c** includes a bus **1102** and the pointing of the index finger of the right in the general direction of bus **1102.** Bus **1102** also includes a text such as the bus number and destination. The text may also include details of the route of bus **1102.**

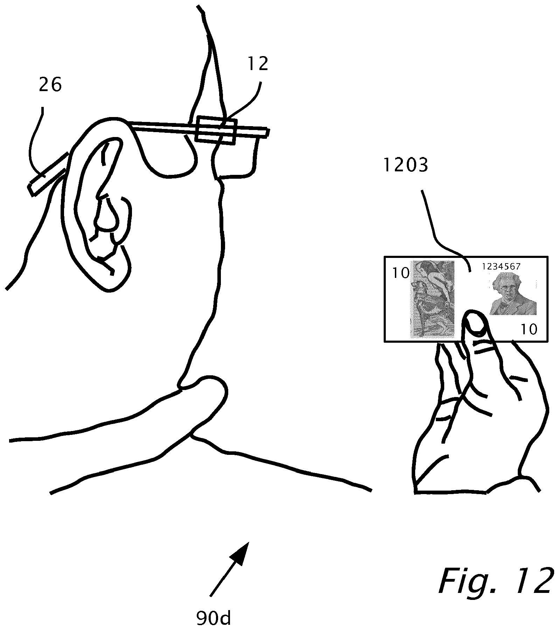

Reference is now made to Figure 12 which shows a visual field **90d** of a person wearing device **40.** Visual field **90d** includes the person holding a banknote **1203** or visual field **90d** may have banknote **1203** on a counter top or in the hands of another person such as shop assistant for example.

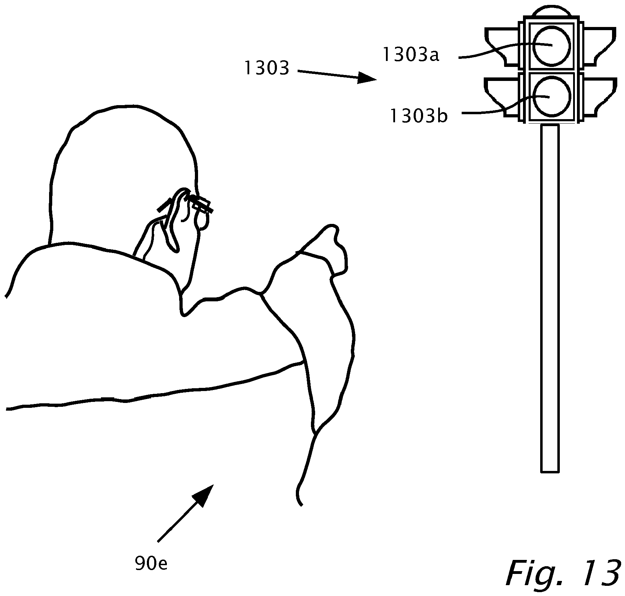

Reference is now made to Figure 13 which shows a visual field **90e** of a person wearing device **40.** Here visual field **90c** includes a traffic signal **1303** and the pointing of the index finger of the right in the general direction of traffic signal **1303.** Here traffic signal has two sign lights **1303a** (red) and **1303b** (green) which may be indicative of a pedestrian crossing sign or alternatively traffic signal **1303** may have three sign lights (red, amber, green) indicative of a traffic sign used by vehicles as well as pedestrians.

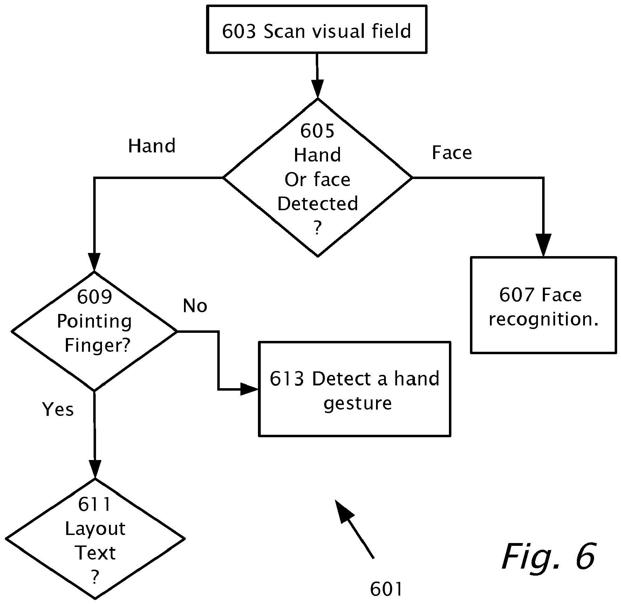

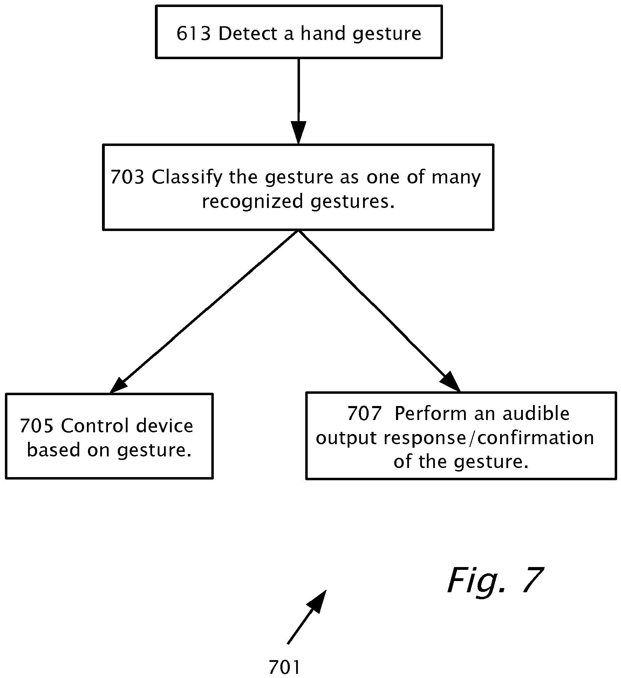

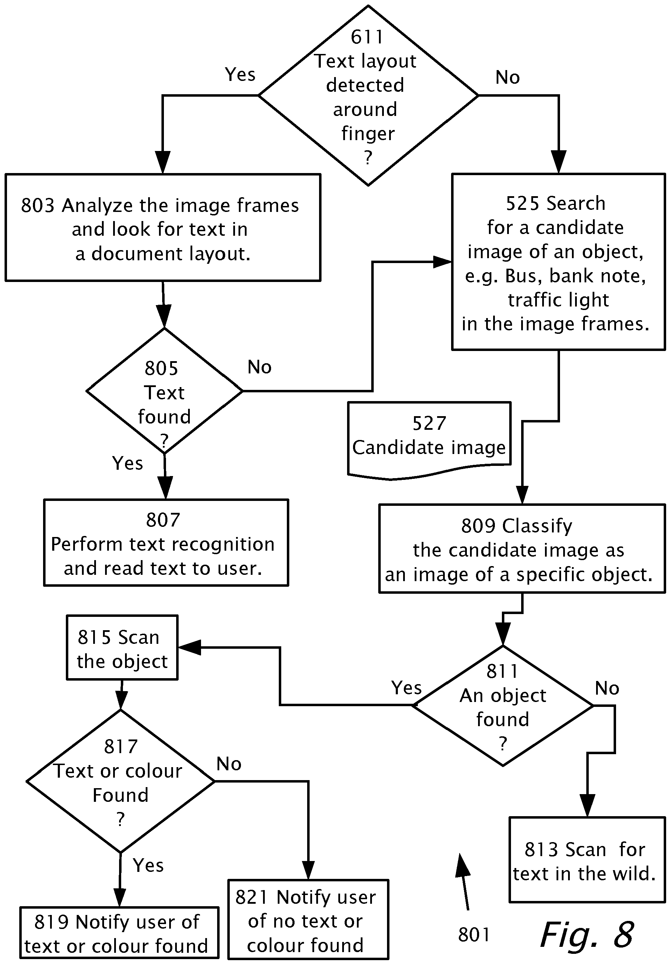

Reference is now made to Figure 6 which shows a method **601,** according to a feature of the present invention. In step **603** the visual field **90** of the person and camera **12** may be scanned while device **40** is worn by the person. In decision block **605** a decision is made to determine if an obj ect detected in visual field **90** is either a hand of the person or a face of another person. If the object detected is the face of another person, facial recognition of the other person may be performed in step **607.** Facial recognition step **607** may make use of classifier **120** which has been previously trained to recognize the faces people who are known to the person. If the object detected in visual field **90** is a hand of the person, in decision box **609** it may be determined if the hand gesture is a pointing finger gesture or not. The pointing finger may be for instance a pointing index finger of the right hand or left hand of the person. If the hand does not include a pointing finger, then hand gestures may be detected starting in step **613** the flow of which continues in Figure 7. If the finger is pointing to an attribute such as a text layout in decision box **611,** the flow continues in Figure 8.

Reference is now made to Figure 7 which shows a method **701,** according to a feature of the present invention. Method **701** is a continuation of step **613** shown in Figure 6. In step **613** a hand gesture of a user is detected and recognized to not include a pointing finger. In step **703** the hand gesture may be classified as one of many recognizable gestures of trained classifier **509.** Recognizing the hand gesture as one of many hand gestures may simultaneously provide control (step **705**) of device **40** based on the hand gesture as well as providing an audible output via audio unit **26** in response to and/ or in confirmation of the hand gesture (step **707**)**.** In step **705,** control of device **40** may include gestures to recognize colours, to stop a process of recognizing just buses for example, increase the volume of unit **26,** to stop and/ or start reading recognized text, to start recording video or to take a picture. In step **707,** the audible output may be click sound, bleep, a one word confirmation or to notify the person that a specific mode has been entered, such as just looking for buses and bus numbers for example. Audible output response in step 707 may alternatively or in addition include information or data related to a recognized object.

Reference is now made to Figure 8 which shows a method **801,** according to a feature of the present invention. Method **801** shows the continuation of decision step **611** shown in Figure 6. Decision step **611** is reached by virtue of finding a finger pointing in visual field **90** in step **609.** In decision step **611** it is determined if a text layout is detected around a pointing finger and if so, the resolution of camera **12** may be increased to enable analysis (step **803**) of image frames **14** so as to look for example for a block of text within the text layout of a document. If text is found in decision block **805,** recognition of the text is performed in step **807** and the text may be read to the person via audio unit **26.** The index finger may be used to point to which specific portion of text to be recognized and to be read in the document.

In both decision boxes **805** and **611,** if no text is found, a search for a candidate image **527** in the field of view **90** for an object may be performed in step **525.** The search in step **525** may be made with a lower resolution of camera **12** to enable searching of the object in image frames **14.** The object may be a vehicle such as a bus, a bank note and/ or traffic light shown in views **90c, 90d** and **90e** respectively for example. The candidate image **527** may then be classified in step 809, using classifier **509** as an image of a specific object. Alternatively to using a hand gesture, the person may track the candidate image to provide a tracked candidate image in the image frames **14.** The tracking may be based on sound perception, partial vision or situational awareness by orienting the head-worn camera 12 in the direction of the object. The tracked candidate image may be then selected for classification and recognition.

In decision block **811,** if an object is found, it may be possible to inform the person what the object is (bus **1102,** bank note **1203** or traffic signal **1303** for example) and to scan the object (step **815**) for attributes of the object such as text, colour or texture. If text and/ or colour is found, in decision **817** on or for the object, the user may be audibly notified (step **819**) via audio unit **26** and the recognized text may be read to the person. In the case of bus **1102** the bus number may be read along with the destination or route based on recognized text and/ or colour of the bus. In the case of bank note **1203** the denomination of the bank note (5 British pounds pounds or 5 American dollars) may be read to the person based on recognized text and/ or colour or texture of the bank note. In the case of traffic signal **1303** based on the colour of traffic signal **1303** or a combination colour and/or text of traffic signal **1303** to stop or to walk.

If no text is found on the object then the user may be audibly notified (step **821**) via audio unit **26** that no text has been found on the object. In decision step **811,** if no object is found, then a scan for any text in the image frames **14** may be made in step **813.** Decision step **817** may be run again after step **813** to notify of text (step **819**) and unit **26** to read the text or notify (step **821**) of no text found.

The indefinite articles "a", "an" is used herein, such as "a candidate image", "an audible output" have the meaning of "one or more" that is "one or more candidate images" or "one or more audible outputs".

Although selected features of the present invention have been shown and described, it is to be understood the present invention is not limited to the described features. Instead, it is to be appreciated that changes may be made to these features without departing from the principles and spirit of the invention, the scope of which is defined by the claims and the equivalents thereof.

The disclosures in United States patent application nos. 61/443,739 and 61/443,776, from which this application claims priority, and in the abstract accompanying this application, are incorporated herein by reference.

## Claims

1. A method for visually assisting a person using a device wearable by the person, the device including a camera and a processor wherein the processor is adapted to capture a plurality of image frames from the camera, the method comprising:
searching for a candidate image in the image frames;
classifying thereby recognizing said candidate image as an image of an obj ect; and
notifying the person of an attribute related to the obj ect.

2. The method of claim 1, wherein said candidate image includes a specific hand gesture, wherein said classifying includes recognizing the specific hand gesture.

3. The method of claim 2, further comprising:
audibly confirming to the person that the specific hand gesture is recognized.

4. The method of claim 2 or 3, wherein said candidate image includes the object in the environment of the person other than the hand gesture, the method further comprising:
controlling the device responsive to the object in the environment.

5. The method of any preceding claim, further comprising:
tracking by the person by maintaining said candidate image in the image frames to provide a tracked candidate image; and
selecting said tracked candidate image for said classifying.

6. The method of any preceding claim, wherein the object is selected from the group of classes consisting of: buses, traffic signals and bank notes.

7. The method of any preceding claim, wherein the object is selected from the group consisting of: buses and traffic signals.

8. The method of any of claims 1 to 6, wherein the object is selected from the group consisting of: traffic signals and bank notes.

9. The method of any of claims 1 to 7, wherein the object is a bus and the attribute is selected from the group consisting of: the number of the bus line, the destination of the bus, and the route of the bus.

10. The method of any of claims 1 to 8, wherein the object is a traffic signal and the attribute includes the state of the traffic signal.

11. The method of any of claims 1 to 6 or 8, wherein the object is a bank note and the attribute includes the denomination of said bank note.

12. A device wearable by a person for visually assisting a person using the device, the device including a camera and a processor wherein the processor is adapted to capture a plurality of image frames from the camera, the device and/or processor being operable to:
search for a candidate image in the image frames;
classify thereby recognize said candidate image as an image of an object; and
notify the person of an attribute related to the object.

13. The device of claim 12, wherein said candidate image includes a specific hand gesture, wherein the device is operable to classify the specific hand gesture.

14. The device of claim 12 or 13, further operable to:
audibly confirm to the person that the specific hand gesture is recognized.

15. The device of claim 12, 13 or 14, wherein the object is selected from the group of classes consisting of: buses, traffic signals and bank notes.
